(19) Europäisches Patentamt
European Patent Office
Office européen des brevets

(11) **EP 3 876 134 A1**

(12) **EUROPEAN PATENT APPLICATION**

(43) Date of publication:
08.09.2021 Bulletin 2021/36

(51) Int Cl.:
*G06F 30/20* (2020.01)    *G06F 119/04* (2020.01)

(21) Application number: 20161186.0

(22) Date of filing: 05.03.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **MADURESH, Maduresh**
**800023 Patna, Bihar (IN)**
• **NARAYANAN, Sankar**
**560100 Bengaluru, Karnataka (IN)**

(74) Representative: **Patentanwaltskanzlei WILHELM & BECK**
**Prinzenstraße 13**
**80639 München (DE)**

(54) **SYSTEM, APPARATUS AND METHOD FOR PREDICTING LIFE OF A COMPONENT**

(57)    A system (100), an apparatus (110) and a method (200) for predicting life of a component is disclosed. The method (200) comprises obtaining material data corresponding to a material of the component. The method further comprises configuring a life model based on the material data obtained. The method further comprises computing a model-form uncertainty associated with the life model. Based on the model-form uncertainty computed, the life of the component is predicted using the life model.

## FIG 1

**Description**

The present invention relates to asset management and more particularly relates to a system, an apparatus and a method for predicting life of a mechanical component of an asset deployed in a field of operation.

Industrial facilities employ numerous assets for performing different operations. The asset may be a mechanical system or an electromechanical system. Each such asset may include a plurality of mechanical components, henceforth referred to as components. For example, blades and disks may be considered as components of gas turbines.

Unexpected failure of a component may lead to a down time of the asset. Therefore, it is necessary to predict a life of the component before the failure occurs, for ensuring smooth operation of the asset. Typically, mechanical components are fabricated using materials for enhanced performance levels. For example, the enhanced performance levels may be associated with withstanding corrosion, pressure, elevated temperatures and so on. Consequently, the life of a component is dependent on properties of the material used for fabricating the component. Further, determination of the life of the component is necessary for scheduling of maintenance activities for the asset such that the down time of the asset is reduced. Currently, the life of components is predicted using deterministic models. However, such deterministic models do not account for uncertainties in the properties of the material of the component. Consequently, the life predicted using such deterministic models may not be accurate. Further, inaccurate prediction of the life may lead to non-optimal utilization of the component and also unexpected failure of the asset.

In light of the above, there exists a need for a system, an apparatus and a method for predicting probabilistic life of a component.

Therefore, it is an object of the invention to provide a system, an apparatus, and a method for predicting probabilistic life of a component. The component is part of an asset. Non-limiting examples of assets include gas turbines, steam turbines, wind mills, generators, motors, gear, bearing, shaft, switchgear, rotor, transformers, reactors, disconnectors, gear-drive, gradient coils, magnet, radio frequency coils, and large drives.

The object of the present invention is achieved by a computer-implemented method for predicting probabilistic life, henceforth referred to as 'life', of a component as disclosed herein. The term 'life' as used herein may refer to a number of loading cycles that the component may withstand before a failure occurs in a material of the component. In another example, the term 'life' may indicate time to failure of the component measured in a unit of time say, hours.

The method comprises obtaining material data corresponding to a material of the component from a source. The source may include, but not limited to, one or more real time sources, non-real time sources, databases, knowledge graphs and so on. The material data may be indicative of material properties such as tensile strength, toughness, ductility, malleability, brittleness and also data such as composition and process conditions such as temperature and pressure used for manufacturing of the material of the component. The material data may relate to one or more possible failure modes in the component including, but not limited to, High-Cycle Fatigue (HCF), Low-Cycle Fatigue (LCF), creep rupture and fatigue crack growth. In one example, the material data is obtained by cycling a specimen composed of the same material and having similar manufacturing specifications, at constant amplitude stresses until failure occurs. The specimen is tested multiple times at different stress levels until an S-N curve that correlates stress range or amplitude (S) to number of cycles to failure (N) is plotted. It must be understood that in this example, the S-N curve is the material data. The method further comprises configuring a life model based on the material data obtained. The life model is a mathematical model that provides a mathematical relationship between the life associated with the specimen and one or more parameters impacting the life of the specimen. The one or more parameters may be associated with factors including, but not limited to, size of the component, stress or strain distribution, stress or strain concentrations, environmental factors, metallurgical properties, material properties, temperature, surface finish and directional properties associated with the component. In one example, the life model may be based on Coffin-Manson Equation that relates strain amplitude and the number of loading cycles that the specimen may withstand before failure occurs due to LCF. Similarly, the life model may be associated with any of the other failure modes, including but not limited to, creep rupture, HCF or fatigue crack growth.

In one embodiment, configuring the life model based on the material data obtained comprises computing a material scatter associated with the material data. The material scatter is associated with aleatoric uncertainties in the material data. The aleatoric uncertainties contribute to variations in the material data when the specimen is tested at different instances of time, under the same conditions. The material scatter may be defined using probability density functions and may be obtained from the life model by means of statistical analysis. In one embodiment, the probability density function may be defined as a parametric distribution such as Gaussian or normal distribution, or a non-parametric distribution. The probability density functions may describe the scatter in the material data, at a given stress level or scatter in stress at a given number of cycles. The material scatter is indicative of a spread of the probability density function.

In another embodiment, configuring the life model based on the material data obtained comprises calibrating one or more parameters in the life model based on the material data. In a further embodiment, the computation of the material scatter associated with the material data and the calibration of the one or more parameters in the life model based on the material data are performed using an optimization approach based on maximum likelihood estimation. In other words, the life model is calibrated based on the material data and the material scatter computed. The calibrated life model maximizes the likelihood that the life model is the best fit for the material data. In other words, upon optimization, the optimal deterministic values of the parameters that best fit the life model to the material data are obtained along with the material scatter. In one embodiment, one or more constraints are also applied to the one or more parameters. For example, the constraint for a parameter may be such that the value of the parameter may not be greater than one. The one or more constraints may be manually defined by an expert.

The method may further comprise computing a model-form uncertainty associated with the life model. The model-form uncertainty is the epistemic uncertainty associated with the life model. The epistemic uncertainty arises due to insufficient data and/or limited knowledge applied while deriving the life model. In one embodiment, computing the model-form uncertainty associated with the life model comprises determining one or more uncertainties associated with the one or more parameters in the life model, based on the calibrated parameters in the life model and the material scatter using Bayesian inference. The one or more uncertainties are expressed in the form of probability distributions. More specifically, the uncertainty associated with each of the one of more parameters in the life model are computed using Baye's theorem.

Advantageously, the present invention configures the life model based on the scatter in the material data in order to account for both aleatoric uncertainties and epistemic uncertainties.

The method further comprises predicting the life of the component using the life model based on the model-form uncertainty computed. In one embodiment, predicting the life of the component using the life model based on the model-form uncertainty computed further comprises generating a simulation instance using the life model based on the model-form uncertainty computed. For example, the simulation instance may be generated by deriving an analytic model in machine-readable format, corresponding to the life model based on the model-form uncertainty computed. The method further comprises executing the simulation instance in a simulation environment for generating simulation results. In a preferred embodiment, the simulation instance is executed as stochastic simulations. However, it must be understood that the the simulation instance may also be executed in the form of deterministic simulations, dynamic simulations, continuous simulations, discrete simulations, local simulations, distributed simulations and so on. The method further comprises determining life distributions based on the simulation results generated. The life distributions may comprise values of the life of the specimen for different combination of values of the one or more parameters in the life model. The method further comprises predicting the life of the component by analysing the life distributions. The life of the component may be predicted from the life distributions using a suitable statistical analysis framework. In one example, the statistical analysis framework may be based on Finite-Element Analysis (FEA) that divides the component into infinitesimal elements and predicts the life of each of the infinitesimal elements in the component. Further, an overall life of the component may be determined by integrating the life values of the infinitesimal elements in the component. In other words, the statistical analysis framework helps in extrapolating the life distributions across the infinitesimal elements in the component. In addition, the statistical analysis framework may also be used for simulating fatigue behaviour of the component.

In one embodiment, generating the at least one simulation instance comprises sampling of posterior distributions generated from prior distributions associated with the one or more parameters to generate posterior samples. In one further embodiment, the posterior samples are generated from the posterior distributions based on proposal functions determined using Fisher Information Matrix and Negative Log Likelihood calculations. The proposal function is calculated using analytically determined Fisher Information Matrix and Negative Log Likelihood in order to reduce an overall computation time associated with predicting the life. The posterior samples are further used to generate the simulation instance.

Advantageously, in the present invention, the life of the component is determined in the form of life distributions for different values of the one or more parameters, that is as probabilistic life, rather than deterministic values as in the state of the art. The life distributions help a user in understanding the inherent uncertainties in the life model and the uncertainties in the material properties.

The method may further comprise determining a root cause associated with the one or more possible failure modes in the component. The root cause may be defined as any factor that causes the one or more possible failure modes in the component. The root causes may include, but are not limited to, a design of the component, a manufacturing process of the component, a material used for fabricating the component, contamination of the material of the component and improper usage of the component. The root cause may be determined based on a type of the possible failure by using any known root cause analysis technique. In one example, the root cause analysis technique may employ root cause analysis models such as Neural Networks, Bayesian network classifiers, Support Vector Machines (SVMs) and so on, for inferring the root cause based on the type of anomaly. Alternatively, the root cause may also be determined using root cause analysis techniques such as fault-tree analysis, failure mode and effects analysis and so on. The method may further comprise identifying a design parameter affecting the life of the component based on the root cause. It must be understood by a person skilled in the art that the design parameters may include any qualitative or quantitative aspect associated with the design of the component. Examples of design parameters may include a type of material used for fabricating the component, a composition of the material, directional properties of the material, a density of the material, a geometrical shape of the material, dimensions of the component, a process parameter such as temperature or pressure used during manufacturing of the component and so on.

The method may further comprise generating a design of the component based on the identified design parameter. The design may be generated by modifying or altering the design parameter such that the possibility associated with occurrence of the one or more possible failures in the component is reduced. The generated design may be further used to improve design of other similar components in pre-production phase. In one embodiment, the life of the component may be recomputed based on a life model corresponding to the generated design. In one implementation, the improved design is further communicated to a designer of the component as recommendations in order to implement the design in newly manufactured components. For example, the improved design may be provided to a Design for Manufacturability (DFM) software. The DFM software may further generate one or more designs for facilitating the manufacturing of the component. In another example, the generated design may be directly communicated to an additive manufacturing device upon performing predefined design rule checks. For example, one design rule check may include checking whether the geometric tolerances in the design are within predefined limits.

Advantageously, the present invention helps in refining design of the component based on the one or more possible failures and the computed life of the component.

The method may further comprise determining an impact of the one or more possible failure modes on an asset associated with the component. The impact may include, but is not limited to, productivity losses associated with a failure of the asset resulting from the one or more possible failure modes, operational delays resulting from the failure and costs associated with the failure.

The method may further comprise determining a probability of failure of the asset associated with the component based on the predicted life of the component. The probability of the failure of the asset may be computed based on a cumulative-distribution-function or probability of failure curve derived from the life distribution of the component.

The method may further comprise performing one or more actions for improving the life of the component. In one embodiment, the one or more actions may be associated with sending operational instructions to a subsystem associated with the asset. The operational instructions may be associated with for example, controlling the operating conditions associated with the component. The operating conditions may be associated with temperature, pressure, vibrations, speed, duration of operation and so on. In one example, the operational instructions may be associated with reducing an operational impact of the failure resulting from the one or more possible failure modes on the asset. For example, if the component is a gas turbine blade, then the operational impact associated with say material fatigue may be reduced by adjusting a pressure ratio within the gas turbine.

The method may further comprise optimising a down-time of the asset by scheduling a maintenance activity based on the life of the component. The maintenance activity may include repairing of the component, ordering for a replacement of the component, replacement of the component, and so on. The scheduling of the maintenance activity may include identifying an optimal replacement time for the component, identifying service personnel for performing the maintenance activity and so on. The availability of spares and service personnel may also be consider for scheduling the maintenance activity. For example, if the spares are unavailable, then the probability that the spares may be procured before the start of the maintenance activity may be considered for determining the downtime. In one embodiment of the present invention, the service personnel may also be informed to procure the spares before the start of the maintenance activity by sending a notification to an electronic device associated with the service personnel. The electronic device may be a mobile phone, a personal computer, a tablet and so on. The notification may be sent before an predefined time before the life, say 20 loading cycles, ahead of the maintenance activity so as to enable the service personnel to procure the spares. Similarly, the service personnel may receive multiple notifications for procuring the spares. In addition, the notifications may also include web links to sources for procuring the spares. The web links may be selected and added to the notification based on, for example, the type of spares required.

Advantageously, the present invention helps in optimising the downtime of the asset, thereby ensuring maximized productivity of asset.

The method may further comprise outputting the life of the component on a Graphical User Interface. In one embodiment, life distributions for the one or more parameters may be displayed on the Graphical User Interface, as graphical plots. In another embodiment, a single value of the life may be displayed on the Graphical User Interface based on one or more parameters provided by a user. The user may, for example, provide different values for the material data to determine the life under various conditions.

Advantageously, the present invention enables a user to visualise life distributions for different sets of parameters on the Graphical User Interface, rather than provide a single deterministic value for the life of the component.

The object of the present invention is achieved by a data-processing apparatus comprising means for carrying out the method described above. In one embodiment, the apparatus comprises one or more processing units, and a memory unit communicatively coupled to the one or more processing units. The memory unit comprises one or modules stored in the form of machine-readable instructions executable by the one or more processing units. The one or more modules are configured to perform method steps described above. The execution of the one or more modules may also be performed using co-processors such as Graphical Processing Unit (GPU), Field Programmable Gate Array (FPGA) or Neural Processing/Compute Engines. In addition, the memory unit may also include a database.

Additionally, the object of the present invention is achieved by a data-processing system for carrying out the method described above. In one embodiment, the system comprises one or more devices capable of providing material data associated with the component and an apparatus as described above, communicatively coupled to the one or more devices. The apparatus is configured to compute the life of the component based on the material data. The one or more devices may include sensing units, electronic devices, edge devices, servers and so on.

The object of the present invention is also achieved by a computer program product comprising instructions which, when the program is executed by a computer, cause the computer to carry out the method as described above.

The object of the present invention is also achieved by a computer-readable storage medium comprising instructions which, when executed by a computer, cause the computer to carry out the method as described above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1         illustrates a system for predicting life of a component, in accordance with one embodiment of the present invention;

FIG 2         illustrates a flowchart of a method for predicting life of a component, in accordance with one embodiment of the present invention;

FIG 3         illustrates a flowchart of method for predicting life of a gas turbine blade is described, in accordance with one embodiment of the present invention;

FIGS 4A-D    illustrate prior distributions for the parameters in a life model of the material of the gas turbine blade as displayed on a GUI;

FIGS 4E-H    illustrate posterior distributions for the parameters in the life model of the material of the gas turbine blade as displayed on the GUI;

FIG 5         illustrate a flowchart of a method for simulating draws from the posterior distributions, in accordance with one embodiment of the present invention;

FIG 6         illustrates life distributions for a specimen for different strain levels as displayed on the GUI;

FIG 7         illustrates a flowchart of a method for improving a design of the gas turbine blade based on the life of the gas turbine blade, in accordance with one embodiment of the present invention; and

FIG 8         illustrates a flowchart of a method for scheduling a maintenance activity for the gas turbine, in accordance with one embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

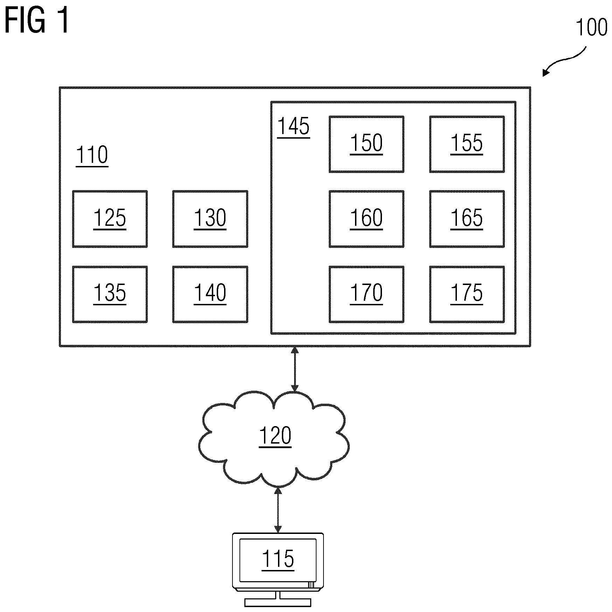

Referring to FIG 1, a system 100 for predicting life of a component is shown, in accordance with one embodiment of the present invention.

The system 100 includes an apparatus 110 communicatively coupled to an electronic device 115 over a network 120. In the present embodiment, the network 120 may be a wireless network. The electronic device 115 may be any device that is configured for receiving, analyzing and transmitting to the apparatus 110, material data associated with the component. The material data may be associated with the component or other components having similar manufacturing specifications. The material data may be real-time data, offline data or a combination thereof.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

The apparatus 110 includes a communication unit 125, one or more processing units 130, a display 135, a Graphical User Interface (GUI) 140 and a memory 145 communicatively coupled to each other. In one embodiment, the communication unit 125 includes a transmitter (not shown), a receiver (not shown) and Gigabit Ethernet port (not shown) . The memory 145 may include 2 Giga byte Random Access Memory (RAM) Package on Package (PoP) stacked and Flash Storage. The one or more processing units 130 are configured to execute the defined computer program instructions in the modules. Further, the one or more processing units 130 are also configured to execute the instructions in the memory 145 simultaneously. The display 135 includes a High-Definition Multimedia Interface (HDMI) display and a cooling fan (not shown). Additionally, control personnel may access the apparatus 110 through the GUI 140. The GUI 140 may include a web-based interface, a web-based downloadable application interface, and so on.

The processing unit 130, as used herein, may refer to any type of computational circuit, including, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 130 may also include embedded controllers, such as generic or programmable logic devices or arrays, application specific integrated circuits, single-chip computers, and the like. In general, a processing unit 130 may comprise hardware elements and software elements. The processing unit 130 can be configured for multithreading, i.e. the processing unit 130 may host different calculation processes at the same time, executing the either in parallel or switching between active and passive calculation processes.

The memory 145 may comprise a volatile memory and a nonvolatile memory. The memory 145 may be coupled for communication with the processing unit 130. The processing unit 130 may execute instructions and/or code stored in the memory 145. A variety of computer-readable storage media may be stored in and accessed from the memory 145. The memory 145 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory 145 comprises a model configuration module 150, an uncertainty module 155, a prediction module 160, a design modification module 165, a maintenance module 170 and a report generation module 175 in the form of machine-readable instructions on any of the above-mentioned storage media and may be in communication to and executed by the one or more processing units 130. The following description explains functions of the modules when executed by the one or more processing units 130.

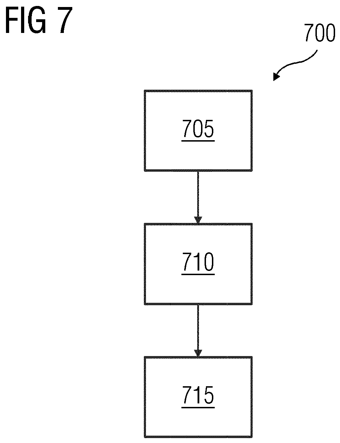

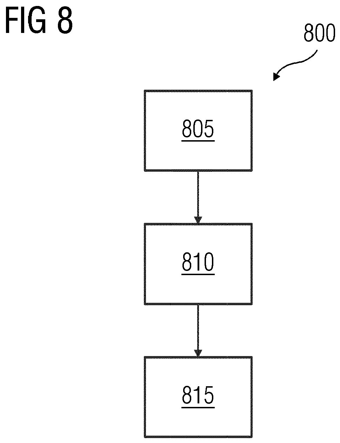

The model configuration module 150 is configured for configuring a life model that may be used for estimating the life of the component, based on material data obtained from a specimen having similar material characteristics as that of that of the component. The uncertainty module 155 is configured for computing a model-form uncertainty associated with the life model. The prediction module 160 is configured for predicting the life of the component using the life model based on the model-form uncertainty computed. The design modification module 165 is configured for generating a design of the component such that the generated design improves the life of the component. The generation of the design of the component is explained with reference to FIG 7. The maintenance module 170 is configured for optimising a downtime of the gas turbine by scheduling a maintenance activity for the gas turbine based on the life predicted by the prediction module 160. The scheduling of maintenance activities is further explained with reference to FIG 8. In addition to scheduling of maintenance activities, the maintenance module 170 may further determine one or more actions for improving the life of the component. Further, the apparatus 110 may perform the one or more actions by sending operational instructions to a subsystem associated with the gas turbine, for controlling operating conditions such as pressure ratio associated with the gas turbine.

The report generation module 175 may generate reports in the form of notifications on the GUI 140. The reports may indicate the life of the component, a schedule of a maintenance activity associated with the component, the one or more possible failures in the component and an impact of the one or more possible failures on the operation of the gas turbine.

Those of ordinary skilled in the art will appreciate that the hardware depicted in FIG 1 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

A system in accordance with an embodiment of the present invention includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present invention as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises elements distributed among one or more server systems that perform multiple functions according to various embodiments. These elements comprise, for example, executable, intermediate, or interpreted code, which communicate over a network using a communication protocol. The present invention is not limited to be executable on any particular system or group of system, and is not limited to any particular distributed architecture, network, or communication protocol.

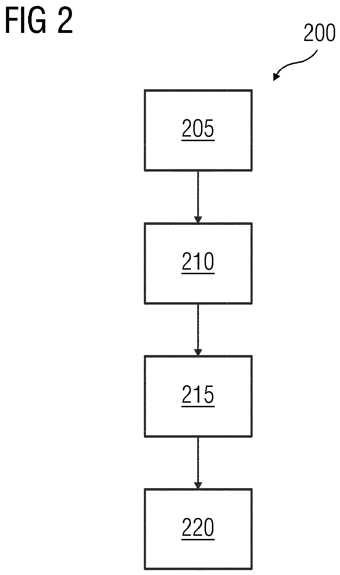

Referring to FIG 2, in conjunction with FIG 1, a method 200 for predicting life of a component is described, in accordance with one embodiment of the present invention. The method 200 includes steps 205 to 220.

At step 205, material data corresponding to a material of the component is obtained.

At step 210, a life model is configured based on the material data obtained.

At step 215, a model-form uncertainty associated with the life model is computed.

At step 220, the life of the component is predicted using the life model based on the model-form uncertainty computed.

Disclosed embodiments provide systems and methods for predicting life of a component.

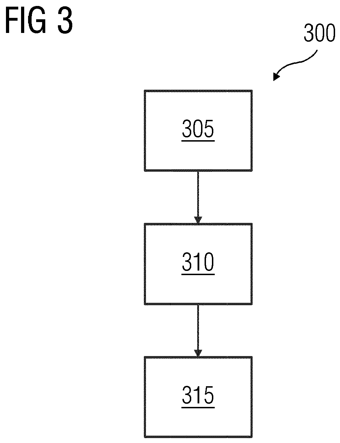

Referring to FIG 3, in conjunction with FIGS 1 and 2, a method 300 for predicting life of a gas turbine blade (not shown) is described, in accordance with one embodiment of the present invention. The method 300 comprises steps 305-315. Assume that the gas turbine blade shows symptoms of low-cycle fatigue.

At step 305, material data associated with the gas turbine blade is obtained from the electronic device 115. The material data is obtained by performing cyclic tests on a specimen composed of the same material as the gas turbine blade. In the present embodiment, the material data may be prestored in a memory (not shown) of the electronic device 115.

At step 310, a life model is configured based on the material data obtained. The life model is configured by computing a material scatter associated with the material data and calibrating one or more parameters in the life model using an optimization approach based on Maximum Likelihood Estimation.

The life model corresponding to low cycle fatigue may be in the form of Coffin-Manson-Basquin equation as shown below:

$$\epsilon_a = \frac{\sigma_f' - \sigma_m}{E}(2N_f)^b + \epsilon_f'(2N_f)^c \qquad (1)$$

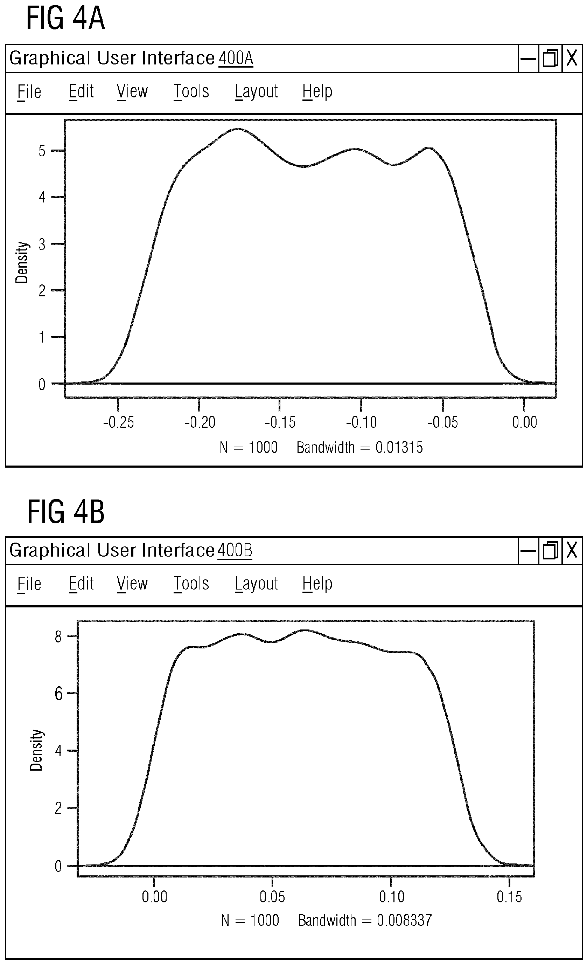

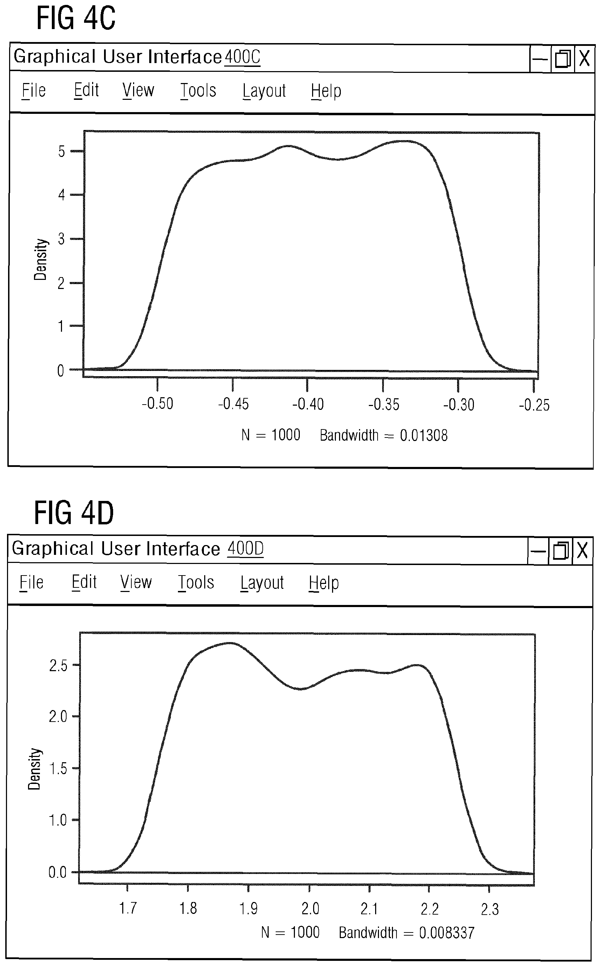

Here, $\sigma_f'$ is the fatigue strength coefficient, b is fatigue strength exponent, $\varepsilon_a$ is strain amplitude, $\varepsilon_f'$ is fatigue ductility coefficient, c is fatigue ductility exponent, E is cyclic Young's modulus, m is the shape, and $N_f$ is load cycles until crack initiation (that is, the life) . In this case, the parameters associated with the life model are b, $\varepsilon_f'$, c and m. The material scatter is determined in the form of probability density function. The probability density functions may be prior distributions corresponding to each of the parameters having a large interval comprising optimised values of the parameter. The optimised values of the parameters may be the values of the parameters calibrated using the Maximum Likelihood Estimation. Each of the parameters b, $\varepsilon_f'$, c and m have a prior distribution as shown in FIGS 4A, 4B, 4C and 4D respectively. More specifically, the prior distributions for the parameters b, $\varepsilon_f'$, c and m are shown on GUIs 400A, 400B, 400C and 400D respectively in FIGS 4A-4D. In addition to the above, parameters corresponding to surrogate models of the above parameters may also be included.

At step 315, a posterior distribution p(θ|y) is calculated for each of the parameters b, $\varepsilon_f'$, c and m based on the corresponding prior distribution p(θ) and and a likelihood function L(y|θ), using Bayesian inference as shown below:

$$p(\theta|y) \propto L(y|\theta)\,p(\theta) \qquad (2)$$

More specifically, the posterior distributions are calculated for the parameters as shown below in order to determine the model-form uncertainty associated with the life model:

$$p\left((b, \epsilon_f', c, m)|N_i\right) \propto L\left(N_i|(b, \epsilon_f', c, m)\right) P(b, \epsilon_f', c, m)$$

$$(3)$$

In the present embodiment, the likelihood function L(Ni|b, $\epsilon_f$' , c, m) is a Weibull distribution given by:

$$L\left(N_i|(b, \epsilon_f', c, m)\right) = \frac{m}{\eta}\left(\frac{N_i}{\eta}\right)^{m-1} e^{-\left(\frac{N_i}{\eta}\right)^m}$$

$$(4)$$

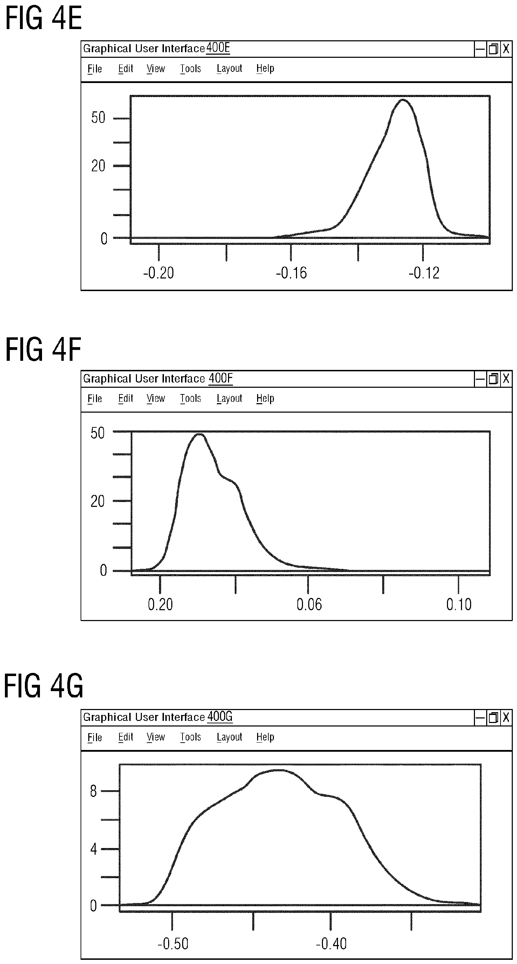

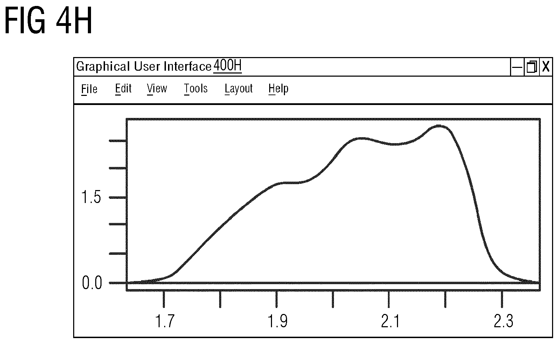

where $N_i$ is observed life at observation 'i' among a plurality of data points, $\eta$ is Weibull scale, m is Weibull shape parameter. Based on the prior distributions and the likelihood function, the posterior distribution is determined for each of the parameters b, $\epsilon_f$', c and m. In other words, the model-form uncertainty associated with the life model is computed in the form of posterior distributions. The posterior distributions for the parameters b, $\epsilon_f$', c and m in the present example are shown in FIGS 4E, 4F, 4G and 4H respectively. More specifically, the posterior distributions for the parameters b, $\epsilon_f$', c and m are shown on GUIs 400E, 400F, 400G and 400H respectively in FIGS 4A-4D. Further, draws are simulated from the posterior distributions determined for each of the parameters. In order to simulate the draws based on Markov Chain Monte Carlo (MCMC) algorithm. More specifically, the MCMC algorithm uses a proposal function based on gradient of a negative log likelihood function (NLL) and a Fisher information matrix. Here, the negative log likelihood function is computed analytically in order to improve the speed of computation as compared to existing MCMC algorithms.

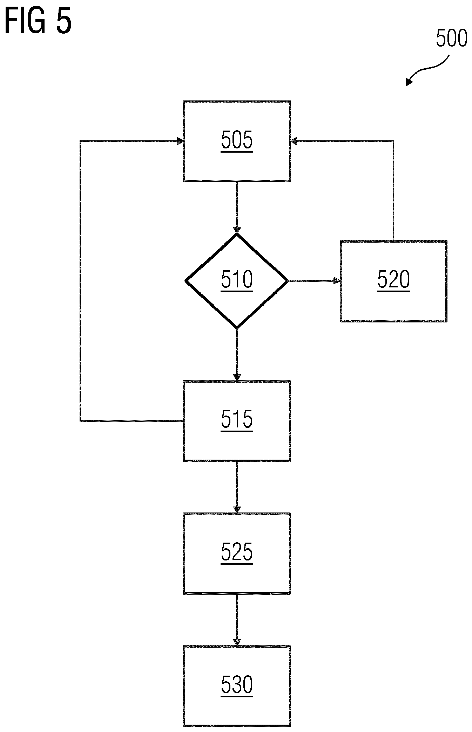

Referring to FIG 5, in conjunction with FIGS 1 to 4H, a method 500 for simulating draws from the posterior distributions is described, in accordance with one embodiment of the present invention. The method 500 includes steps 505 to 530.

At step 505, the proposal function is determined based on a starting value for selecting a next posterior sample. In one example, the starting value $\theta_i$ is determined using an optimization algorithm. More specifically, the optimization algorithm determines optimized values for the parameter in the life model. Further, the respective optimized value is used as the starting value of the parameter during sampling. In another example, the starting value is obtained by random sampling of the prior distribution. In order to determine the proposal function, at first, a gradient of the negative log likelihood and the Fisher information matrix are determined. The negative log likelihood function may be written as below:

$$NLL = \sum_i NLL_i(median_i, shape_i) = \sum_i NLL_i((median_i(\beta_i)), shape_i)$$

$$= \sum_i NLL_i((median_i(\beta_i(\theta))), shape_i(\theta))$$

$$(5)$$

Therefore, the gradient of the NLL may be determined using chain-rule as shown below:

$$\frac{\partial NLL_i}{\partial \theta_i} = \frac{\partial NLL_i}{\partial median_i} \frac{\partial median_i}{\partial \beta_i} \frac{\partial \beta_i}{\partial \theta} + \frac{\partial NLL_i}{\partial shape_i} \frac{\partial shape_i}{\partial \theta_i}$$

$$(6)$$

where, $\frac{\partial NLL_i}{\partial median_i}$ is not directly dependent on $\beta_i$ or 0, and $\frac{\partial median_i}{\partial \beta_i}$ is not directly dependent on 0.

Assume that θ is a one-dimensional vector having k elements as shown below:

$$\theta = \theta[1], \theta[2]...\theta[k]$$

$$(7)$$

The Fisher information matrix is a kxk matrix, wherein the m-th element in the r-th row is calculated as:

$$[\text{fish}(\theta, P)]_{r,m} = \int \frac{\partial(\log P(y|\theta))}{\partial\theta[r]} \frac{\partial(\log P(y|\theta))}{\partial\theta[m]} P(y|\theta)\,dy$$

$$(8)$$

Further, based on the gradient of the NLL and the Fisher information matrix, the proposal function is determined as below:

$$\text{Prop}(\theta = \theta_i, P'(\theta) = P(\theta)) = N\left(\left(\theta_i + \frac{\varepsilon^2}{2}(\text{fish}(\theta_i, P))^{-1}\nabla_\theta(\log P(\theta))|_{\theta=\theta_i}\right), \epsilon^2(\text{fish}(\theta_i, P))^{-1}\right)$$

$$(9)$$

where, $\theta_i$ is the starting value of θ, and ε is step-size for selecting posterior samples from the posterior distribution. In one example, the proposed value $y_{i+1}$ may be a mean of the posterior sample. In a preferred embodiment, the step size may have a value between 0.55 and 0.85 for optimum sampling of the posterior distribution. Further, the posterior sample is determined using the proposal function determined.

At step 510, the proposed value $y_{i+1}$ is checked against a predefined criteria. For example, the predefined criteria is such that if the ratio between the probability density corresponding to the proposed value $y_{i+1}$ and the probability density corresponding to the starting value $\theta_i$ in the posterior distribution is greater than 1, then the proposed value $y_{i+1}$ is accepted. Otherwise, the proposed value $y_{i+1}$ is accepted or rejected based on Metropolis-Hastings algorithm.

Now, if the proposed value $y_{i+1}$ is accepted, then the proposed value $y_{i+1}$ may be assigned as the starting value $\theta_i$ as shown in step 515. Further, step 505 is repeated for determining the next proposed sample. However, if the proposed value $y_{i+1}$ is rejected, then a new starting value $\theta_i$ is considered for determining the new proposed value as shown in step 520. Further, steps 505 to 520 are repeated until the accepted samples converges to the posterior distribution. It must be understood that the steps 505 to 520 are performed on posterior distributions corresponding to each of the parameters b, $\varepsilon_f'$, c and m impacting the life of the gas turbine blade.

At step 525, a Markov Chain is generated for each of the parameters b, $\varepsilon_f'$, c and m based on the accepted values in step 520.

At step 530, a fatigue behaviour of the gas turbine blade is simulated in the simulation environment based on the Markov Chains generated. In one implementation, the parameter values from the posterior distribution are employed to yield numerous instances of average-life curves. Further, from the average-life curves, a percentile curve corresponding to a predefined confidence level, for example 95%, is derived. The percentile curve is further employed for simulating the fatigue behaviour of the component. Upon simulation of the fatigue behaviour, simulation results are generated.

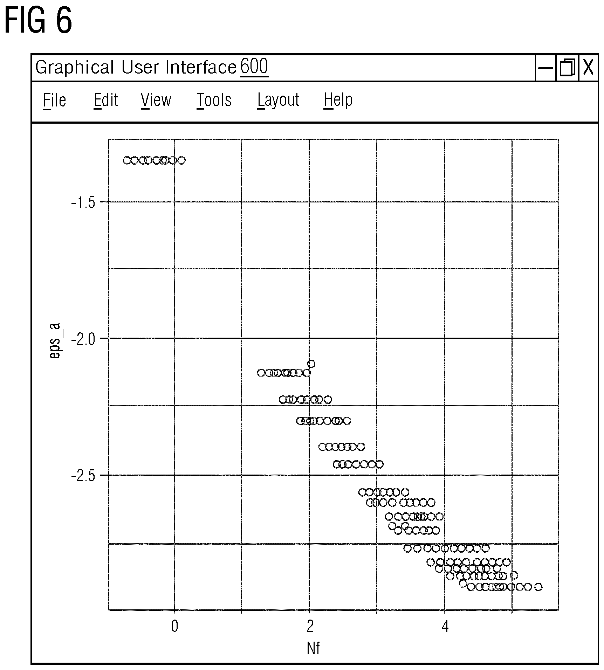

Further, life distribution corresponding to the material data from a specimen of the same material as the gas turbine blade is employed on the simulation results. Further, at a certain life value, an overall probability of failure of the component is calculated via an approach involving integration of hazard density functions. In one example, the life distributions for the specimen at different strain levels may be as shown in FIG 6. More specifically, FIG 6 shows a GUI 600 showing the life distributions for the specimen.

Referring to FIG 7, in conjunction with FIGS 1 to 6, a method 700 for improving a design of the gas turbine blade based on the computed life is described, in accordance with one embodiment of the present invention. The method 700 comprises steps 705-715.

At step 705, a root cause associated with the possible failure in the gas turbine blade is determined. In the present example, a root cause associated with low cycle fatigue is determined. The root cause may be determined using fault tree analysis. The root cause may be initiation of a crack due to LCF in the gas turbine blade.

At step 710, a design parameter affecting the life based on the root cause is identified. The design parameter may be, for example, the composition of the material of the gas turbine blade, a tensile strength of the material, a design temperature of the gas turbine blade and so on.

At step 715, an improved design of the gas turbine blade is generated based on the identified design parameter such that the generated design is associated with an improved life of the gas turbine blade. The generated design may be such that the design pressure 35% greater than a current design pressure of the gas turbine blade.

In one embodiment, the design may be further provided to a Design for Manufacturability (DFM) software. The DFM software may further generate one or more designs for facilitating the manufacturing of the gas turbine blade.

Referring to FIG 8, in conjunction with FIGS 1-6, a method 800 for scheduling a maintenance activity for the gas turbine is described, in accordance with one embodiment of the present invention. The method 800 comprises 805-815.

At step 805, a life of the gas turbine blade is predicted.

At step 810, a maintenance activity for the gas turbine blade is determined based on the life predicted. For example, if the life is less than a predefined threshold, then the maintenance activity may include ordering a replacement for the gas turbine blade and installing the replacement for the gas turbine blade. Alternatively, if the life is greater than the predefined threshold then the maintenance activity may include performing a repair on the gas turbine blade.

At step 815, a down time for an asset associated with the gas turbine blade, that is the gas turbine, is scheduled based on the life, a nature of operation performed by the asset, a period of operation of the asset and so on. For example, if the asset is continuously operated from 9 am to 5 pm everyday, then the down time may be scheduled after 5 pm before a certain number of loading cycles of the asset prior to the end of the life. In another embodiment, an optimal replacement time is determined for the gas turbine blade based on the life predicted. The optimal replacement time for the gas turbine blade may be determined based on a total cost for preventive replacement of the gas turbine blade and a total cost for failure replacement of the gas turbine blade. The optimal replacement time may be determined as a predefined time interval over which the gas turbine blade may be replaced as a preventive maintenance measure. The schedule may be further displayed on the GUI 140 to a service personnel in the form of a report.

In one embodiment, an impact associated with the possible failure of the gas turbine blade on the operation of the gas turbine is determined. In one example, the impact may be an operational delay resulting from the failure of the gas turbine blade. The operational delay or a down time may be calculated based on time required for repairing the gas turbine upon failure of the gas turbine blade. In another example, the impact may be a financial cost associated with the down time of the gas turbine. For example, the financial cost may be calculated based on the cost associated with repairing the gas turbine after the failure has occurred, cost associated with one or more cumulative failures resulting from the failure of the gas turbine blade in a technical installation comprising the gas turbine, cost associated with lost production time and so on. The impact determined is further displayed on the GUI 140 to the service personnel in the form of a report.

In one embodiment, one or more actions may be performed for improving the life of the gas turbine blade. The one or more actions may include for example, sending control instructions to a control system associated with the gas turbine. For example, the control instruction may be provided to a pressure control system of the gas turbine, for reducing an air compressor mass flow rate, such that a pressure on the gas turbine blade is reduced for improving the life of the gas turbine blade. In other words, the one or more actions are performed for delaying the failure of the gas turbine blade.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deducted by those skilled in the art without leaving the scope of protection of the claimed invention.

Reference Numerals

100    system for predicting life of a component
110    apparatus
115    electronic device

| 120 | network |
|---|---|
| 125 | communication unit |
| 130 | one or more processing units |
| 135 | display |
| 140 | Graphical User Interface |
| 145 | memory |
| 150 | configuration module |
| 155 | uncertainty module |
| 160 | prediction module |
| 165 | design modification module |
| 170 | maintenance module |
| 175 | report generation module |

**Claims**

1. A computer-implemented method (200) for predicting life of a component, the method comprising:

   obtaining, by a processing unit (130), material data corresponding to a material of the component from a source (115);
   configuring a life model based on the material data obtained;
   computing a model-form uncertainty associated with the life model; and
   predicting the life of the component using the life model based on the model-form uncertainty computed.

2. The method according to claims 1 wherein configuring the life model based on the material data obtained comprises:
   computing, by the processing unit (130), a material scatter associated with the material data.

3. The method according to claim 1, wherein configuring the life model based on the material data obtained comprises:
   calibrating, by the processing unit (130), one or more parameters in the life model based on the material data.

4. The method according to claims 2 and 3, wherein the computation of the material scatter associated with the material data and the calibration of the one or more parameters in the life model based on the material data are performed using an optimization approach based on maximum likelihood estimation.

5. The method according to claims 1 to 3, wherein computing the model-form uncertainty associated with the life model comprises:
   determining, by the processing unit (130), one or more uncertainties associated with the one or more parameters in the life model based on the calibrated parameters in the life model and the material scatter using Bayesian inference.

6. The method according to claim 1, wherein predicting the life of the component using the life model based on the model-form uncertainty computed further comprises:

   generating, by the processing unit (130), a simulation instance using the life model based on the model-form uncertainty computed;
   executing, by the processing unit (130), the simulation instance in a simulation environment for generating simulation results;
   determining, by the processing unit (130), life distributions based on the simulation results generated; and
   predicting, by the processing unit (130), the life of the component by analysing the life distributions.

7. The method according to claim 1 further comprising:

   determining, by the processing unit (130), a root cause associated with one or more possible failure modes in the component;
   identifying, by the processing unit (130), a design parameter affecting the life of the component based on the root cause; and
   generating, by the processing unit (130), a design of the component based on the identified design parameter.

8. The method according to claim 7 further comprising:

11

determining, by the processing unit (130), an impact of the one or more possible failure modes on an asset associated with the component.

9.  The method according to claim 7, wherein the one or more possible failure modes include a low-cycle fatigue, high-cycle fatigue, creep rupture and crack growth.

10. The method according to claim 1 further comprises:
    optimising, by the processing unit (130), a down-time of the asset by scheduling a maintenance activity based on the life of the component.

11. The method according to claim 1 further comprising:
    performing one or more actions, by the processing unit (130), for improving the life of the component.

12. The method according to claim 1 further comprising:
    determining, by the processing unit (130), a probability of failure of an asset associated with the component based on the predicted life of the component.

13. The method according to claim 1 further comprising:
    outputting, by the processing unit (130), the life of the component on a Graphical User Interface (140).

14. A data-processing apparatus (110) comprising means for carrying out the method of claim 1.

15. A data-processing system (100) comprising means for carrying out the method of claim 1.

16. A computer program product comprising instructions which, when the program is executed by a computer (110), cause the computer (110) to carry out the method of claim 1.

17. A computer-readable storage medium comprising instructions which, when executed by a computer (110), cause the computer (110) to carry out the method of claim 1.

FIG 1

100

# FIG 2

200

205

210

215

220

# FIG 3

300

305

310

315

## FIG 4A

Graphical User Interface 400A — File Edit View Tools Layout Help; Density plot. N = 1000, Bandwidth = 0.01315

## FIG 4B

Graphical User Interface 400B — File Edit View Tools Layout Help; Density plot. N = 1000, Bandwidth = 0.008337

## FIG 4C

Graphical User Interface 400C    — □ X

File    Edit    View    Tools    Layout    Help

N = 1000    Bandwidth = 0.01308

## FIG 4D

Graphical User Interface 400D    — □ X

File    Edit    View    Tools    Layout    Help

N = 1000    Bandwidth = 0.008337

# FIG 4E

Graphical User Interface 400E

File  Edit  View  Tools  Layout  Help

50

20

0

-0.20    -0.16    -0.12

# FIG 4F

Graphical User Interface 400F

File  Edit  View  Tools  Layout  Help

50

20

0

0.20    0.06    0.10

# FIG 4G

Graphical User Interface 400G

File  Edit  View  Tools  Layout  Help

8

4

0

-0.50    -0.40

FIG 4H

Graphical User Interface 400H        — ◻ X

File    Edit    View    Tools    Layout    Help

1.5

0.0

1.7        1.9        2.1        2.3

# FIG 5

500

# FIG 6

Graphical User Interface 600

File    Edit    View    Tools    Layout    Help

eps_a: -1.5, -2.0, -2.5

Nf: 0, 2, 4

FIG 7

700

705

710

715

# FIG 8

800

Europäisches
Patentamt

European
Patent Office

Office européen
des brevets

# EUROPEAN SEARCH REPORT

**Application Number**

EP 20 16 1186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIPING HE ET AL: "Probabilistic Fatigue Life Prediction of TurbineDisc Considering Model Parameter Uncertainty", INTERNATIONAL JOURNAL OF TURBO AND JET ENGINES, vol. 33, no. 2, 1 June 2016 (2016-06-01), pages 1-8, XP055732144, DOI: 10.1515/tjj-2015-0012 | 1-6, 10-17 | INV. G06F30/20 ADD. G06F119/04 |
| Y | * the whole document * * abstract * * page 2, column 2, paragraph 4 * * page 3, column 1, paragraph 1 * * page 3, column 2, paragraph 2 * * page 4, column 1, paragraph 3 * * page 4, column 2, paragraph 3 * * page 5, column 2, paragraph 3 * * page 6, column 1, paragraph 2 * * figure 5 * * section "Probabilistic fatigue life prediction for turbine disc" * | 7-9 | |
| | ----- | | |
| A | Anonymous: "Maximum likelihood estimation - Wikipedia", , 4 March 2020 (2020-03-04), XP055731705, Retrieved from the Internet: URL:https://en.wikipedia.org/w/index.php?title=Maximum_likelihood_estimation&oldid=943960597 [retrieved on 2020-09-17] * the whole document * * paragraph 1 * | 1-6, 10-17 | TECHNICAL FIELDS SEARCHED (IPC) G06F |
| | ----- | | |
| | -/-- | | |

The present search report has been drawn up for all claims

| Place of search | Date of completion of the search | Examiner |
|---|---|---|
| Munich | 23 December 2020 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 16 1186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GAO HAI-FENG ET AL: "Reliability analysis for aeroengine turbine disc fatigue life with multiple random variables based on distributed collaborative response surface method", JOURNAL OF CENTRAL SOUTH UNIVERSITY, vol. 22, no. 12, 16 December 2015 (2015-12-16), pages 4693-4701, XP035571824, DOI: 10.1007/S11771-015-3020-X * the whole document * * equation (9) * | 1-6, 10-17 | |
| A | PEREYRA MARCELO ET AL: "A Survey of Stochastic Simulation and Optimization Methods in Signal Processing", IEEE JOURNAL OF SELECTED TOPICS IN SIGNAL PROCESSING, vol. 10, no. 2, 2 November 2015 (2015-11-02), pages 224-241, XP011598857, DOI: 10.1109/JSTSP.2015.2496908 * the whole document * * abstract * * section I * * section II * * section II.B * * section V.A * * algorithm 1 * * equations (6) and (7) * | 1-6, 10-17 | TECHNICAL FIELDS SEARCHED (IPC) |

-/--

The present search report has been drawn up for all claims

| Place of search | Date of completion of the search | Examiner |
|---|---|---|
| Munich | 23 December 2020 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 20 16 1186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MAJID REZAZADEH REYHANI ET AL: "Turbine blade temperature calculation and life estimation - a sensitivity analysis", PROPULSION AND POWER RESEARCH, vol. 2, no. 2, 1 June 2013 (2013-06-01), pages 148-161, XP055762513, DOI: 10.1016/j.jppr.2013.04.004 * the whole document * * abstract * * equations (1) to (3) * * section 4 * * section 4.1 * * figure 6 * * figures 9,15 * | 7-9 | |
| A | CYRUS MEHER-HOMJI ET AL: "Gas Turbine Blade Failures - Causes, Avoidance, And Troubleshooting", PROCEEDINGS OF THE 27TH TURBOMACHINERY SYMPOSIUM, 20 September 1998 (1998-09-20), pages 129-179, XP055762506, DOI: 10.21423/r1rd4r * the whole document * * abstract * * page 131, column 1, paragraph 1 * * page 136, column 2, paragraph 2 * * figure 6 * * equation (1) * | 7-9 | TECHNICAL FIELDS SEARCHED (IPC) |

The present search report has been drawn up for all claims

| Place of search | Date of completion of the search | Examiner |
|---|---|---|
| Munich | 23 December 2020 | Rungger, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

Application Number

EP 20 16 1186

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 20 16 1186

The Search Division considers that the present European patent application does not comply with the requirements of unity of invention and relates to several inventions or groups of inventions, namely:

```
    1. claims: 2-6, 10-17(completely); 1(partially)

        Predicting life of a component
                        ---

    2. claims: 7-9(completely); 1(partially)

        Improving the design of a component
                        ---
```